(19) Europäisches Patentamt
European Patent Office
Office européen des brevets

(11) EP 3 533 806 A1

(12) **EUROPEAN PATENT APPLICATION**
published in accordance with Art. 153(4) EPC

(43) Date of publication:
**04.09.2019 Bulletin 2019/36**

(21) Application number: **17865556.9**

(22) Date of filing: **31.10.2017**

(51) Int Cl.:
***C08B 37/08*** *(2006.01)*

(86) International application number:
**PCT/JP2017/039272**

(87) International publication number:
**WO 2018/079812 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.10.2016 JP 2016213046**

(71) Applicant: **Kewpie Corporation**
**Tokyo 150-0002 (JP)**

(72) Inventors:
- **SEINO Satoshi**
**Chofu-shi**
**Tokyo 182-0002 (JP)**
- **YODA Shoichi**
**Chofu-shi**
**Tokyo 182-0002 (JP)**
- **KAWAI Natsuko**
**Chofu-shi**
**Tokyo 182-0002 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

# (54) GEL COMPOSITION AND METHOD FOR PRODUCING SAME

(57) The present invention relates to a gel composition containing at least one kind of modified water-soluble hyaluronic acid selected from the group consisting of hyaluronic acid having an anionic modifying group and a salt of the hyaluronic acid and an ion of at least one kind of element selected from the group consisting of elements belonging to from Period 3 to Period 6 and from Group 2 to Group 12 in Periodic Table.

EP 3 533 806 A1

## Description

### Technical Field

The present invention relates to a gel composition and a method for producing the same.

### Background Art

A large number of polysaccharides, which are natural polymers derived from animals, plants, microorganisms and the like, form hydrogels. As the polysaccharides forming hydrogels, there are agarose which are a raw material of agar, pectin, gellan gum, carrageenan, tamarind seed gum, and sodium alginate. The hydrogels formed from these polysaccharides exhibit resilient and supple physical properties, and thus these polysaccharides are utilized in various industrial fields such as chemical products, cosmetics, medical devices, and medicines in addition to foods.

Hyaluronic acid, which is one of polysaccharides, is widely used particularly in cosmetics and medical devices fields to take advantage of physical properties thereof such as water solubility, water retentivity, and elasticity. Meanwhile, hyaluronic acid is also known as a polysaccharide which hardly gels.

Hitherto, as the gelation of hyaluronic acid, gelation using a chemical crosslinking agent (Patent Literature 1), gelation by ultraviolet photo-crosslinking (Patent Literature 2), gelation by an acid treatment or alkali treatment in the presence of an organic solvent (Patent Literature 3) and the like have been conducted.

### Citation List

### Patent Literature

Patent Literature 1: Japanese Unexamined Patent Publication No. H5-140201
Patent Literature 2: Japanese Unexamined Patent Publication No. H11-512778
Patent Literature 3: Japanese Unexamined Patent Publication No. 2010-509425
Patent Literature 4: Japanese Unexamined Patent Publication No. 2016-11312

### Summary of Invention

### Problems to be Solved by the Invention

In the methods disclosed in Patent Literatures 1 to 3, there are a number of problems in terms of production and industrial use since it takes time for gelation and refining, a considerable facility is required, and the like. In addition, the gels obtained by the methods disclosed in Patent Literatures 1 to 3 exhibit elasticity but do not exhibit shaping property unlike agar or alginic acid.

Patent Literature 4 discloses a composition containing a retained vehicle polymer and a controlled releasing crosslinker for crosslinking the retained vehicle polymer in situ in the target, and it is disclosed that hyaluronic acid is crosslinked and a gel is formed in an aqueous composition containing hyaluronic acid at 1% to 2% by weight and a metal salt ($Fe^{2+}$ and $Cu^{2+}$) at 1 to 2 mM. However, the elasticity of the entire composition was slightly improved but a gel exhibiting shaping property was not obtained when supplementary examination was conducted by the present inventors.

In view of the problems of the background art described above, an object of the present invention is to provide a composition capable of gelling in a short time by a simple operation. Another object of the present invention is to provide a method for producing the composition.

### Means for Solving the Problems

The present inventors have found out that gelation immediately occurs as a transition metal ion (for example, $Fe^{3+}$ and $Cu^{2+}$) is added to hyaluronic acid having an anionic modifying group or a salt thereof, and thus completed the present invention.

In other words, the present invention relates to, for example, the following respective inventions.

(1) A gel composition containing:

at least one kind of modified water-soluble hyaluronic acid selected from the group consisting of hyaluronic acid having an anionic modifying group and a salt of the hyaluronic acid; and
an ion of at least one kind of element selected from the group consisting of elements belonging to from Period 3 to Period 6 and from Group 2 to Group 12 in Periodic Table.

(2) The gel composition according to (1), in which the gel composition is insoluble in water.
(3) The gel composition according to (1) or (2), in which a maximum load value to be measured using a texture analyzer is 300 $N/m^2$ or more.
(4) The gel composition according to any one of (1) to (3), in which the ion is an ion of at least one kind of element selected from the group consisting of elements belonging to Period 4 and from Group 3 to Group 12 in Periodic Table.
(5) The gel composition according to any one of (1) to (4), in which the ion is $Fe^{3+}$ or $Cu^{2+}$.
(6) The gel composition according to any one of (1) to (5), in which a percentage modification of the hyaluronic acid having an anionic modifying group is 25% or more.
(7) The gel composition according to any one of (1) to (6), in which an average molecular weight of the hyaluronic acid having an anionic modifying group is 10 kDa or more.
(8) The gel composition according to any one of (1) to (7), in which the anionic modifying group is a carboxyalkyl group.
(9) The gel composition according to any one of (1) to (8), in which the gel composition is a gel exhibiting moldability at time of gelation.
(10) A method for producing a gel composition, including a step of mixing
a solution containing an ion of at least one kind of element selected from the group consisting of elements belonging to from Period 3 to Period 6 and from Group 2 to Group 12 in Periodic Table and
at least one kind of modified water-soluble hyaluronic acid selected from the group consisting of hyaluronic acid having an anionic modifying group and a salt of the hyaluronic acid.
(11) The production method according to (10), in which the solution contains at least one kind of metal ion selected from the group consisting of $Fe^{3+}$ and $Cu^{2+}$.
(12) The production method according to (10) or (11), in which the solution contains $Fe^{3+}$ at 0.5 mM or more.
(13) The production method according to (10) or (11), in which the solution contains $Cu^{2+}$ at 10 mM or more.

## Effects of the Invention

According to the present invention, a gel composition capable of gelling in a short time by a simple operation and a method for producing the gel composition are provided. The gel composition of the present invention can gel in the absence of an organic solvent, and thus time and facilities for refining can be greatly diminished.
In a preferred embodiment of the present invention, a new hydrogel material which exhibits moldability capable of being shaped into an arbitrary shape at the time of gelation in addition to the inherent properties of hyaluronic acid such as water retentivity and elasticity and can maintain the shape even in water is provided. The gel composition of the present invention can be utilized in various industrial fields. In addition, hyaluronic acid is superior to collagen and alginic acid in terms of low antigenicity and biocompatibility and is thus expected to be effectively utilized in particularly medical devices and medicines fields.

## Embodiments for Carrying Out the Invention

Hereinafter, embodiments for carrying out the present invention will be described in detail. However, the present invention is not limited to the following embodiments.

<Features of present invention>

The present invention is characterized by providing a gel composition containing at least one kind of modified water-soluble hyaluronic acid selected from the group consisting of hyaluronic acid having an anionic modifying group and a salt of the hyaluronic acid and an ion of at least one kind of element selected from the group consisting of elements belonging to from Period 3 to Period 6 and from Group 2 to Group 12 in the Periodic Table.
The present invention is also characterized by providing a method for producing a gel composition including a step of mixing a solution containing an ion of at least one kind of element selected from the group consisting of elements belonging to from Period 3 to Period 6 and from Group 2 to Group 12 in the Periodic Table and at least one kind of modified water-soluble hyaluronic acid selected from the group consisting of hyaluronic acid having an anionic modifying group and a salt of the hyaluronic acid.

<Hyaluronic acid having anionic modifying group>

In the present specification, "hyaluronic acid" refers to a polysaccharide having one or more repeating constitutional units composed of a disaccharide of glucuronic acid with N-acetylglucosamine. Hyaluronic acid is basically a disaccharide or higher one containing at least one disaccharide unit in which the 1-position in β-D-glucuronic acid and the 3-position in β-D-N-acetyl-glucosamine are bonded to each other, is basically composed of β-D-glucuronic acid and β-D-N-acetyl-glucosamine, and is one in which a plurality of disaccharide units are bonded to one another. The saccharide may be an unsaturated saccharide, and examples of the unsaturated saccharide may include a non-reducing terminal saccharide, usually those in which the 4th and 5th carbon atoms in glucuronic acid are unsaturated.

Hyaluronic acid having an anionic modifying group is hyaluronic acid in which an anionic modifying group (functional group) is introduced at least into a part. Specific examples thereof may include those in which the hydrogen atom at least in some hydroxyl groups among the hydroxyl groups (C-4 position and C-6 position in N-acetylglucosamine constituting hyaluronic acid and C-2 position and C-3 position in glucuronic acid constituting hyaluronic acid) constituting hyaluronic acid is substituted with an anionic modifying group.

Examples of the hyaluronic acid having an anionic modifying group may include those represented by the following formula.

[Chem. 1]

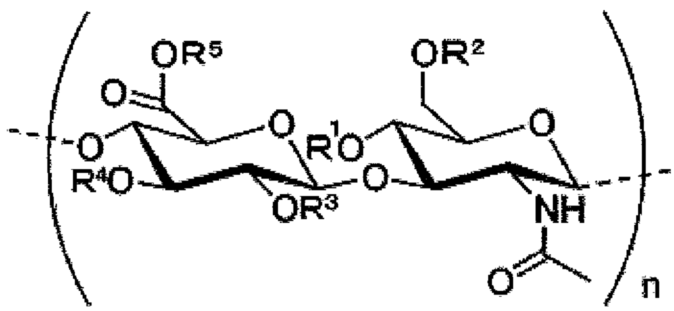

In the formula, $R^1$ to $R^4$ each independently represent a hydrogen atom or an anionic modifying group such as $-(CH_2)_m-COOH$, $-C(-CH_2COOH)_2(-COOH)$, $-CH(-COOH)-CH_2-COOH$, $-CH(-CH_2-COOH)_2$, or $-SO_3H$. However, a case in which $R^1$ to $R^4$ all represents a hydrogen atom is excluded. m represents a natural number 1 or more and 12 or less. $R^5$ represents a hydrogen atom.

<Anionic modifying group>

The anionic modifying group is a functional group which is negatively charged when being dissolved in water. Examples of the anionic modifying group may include carboxyalkyl groups ($-(CH_2)_m-COOH$) such as a carboxymethyl group ($-CH_2-COOH$) and a carboxyethyl group ($-CH_2-CH_2-COOH$), functional groups having a carboxy group such as a tricarboxypropyl group ($-C(-CH_2COOH)_2(-COOH)$), a dicarboxypropyl group ($-CH(-CH_2-COOH)_2$), and a dicarboxyethyl group ($-CH(-COOH)-CH_2-COOH$), a sulfuric acid group ($-SO_3H$), and a phenolic hydroxyl group.

From the viewpoint that the effect by the present invention is more remarkably exerted, the anionic modifying group is preferably a carboxyalkyl group ($-(CH_2)_m-COOH$) and a sulfuric acid group ($-SO_3H$) and more preferably a carboxyalkyl group. In addition, m may be a natural number 1 or more and 12 or less and is preferably a natural number 1 or more and 8 or less.

The anionic modifying group contained in the hyaluronic acid having an anionic modifying group may be only one kind or two or more kinds.

<Percentage modification>

In the present specification, the "percentage modification of hyaluronic acid having an anionic modifying group" (hereinafter also simply referred to as "percentage modification") means the proportion (%) of the number of anionic modifying groups with respect to the number of disaccharide units when disaccharides (glucuronic acid and N-acetylglucosamine) which are adjacent to each other and constitute hyaluronic acid is taken as one unit (disaccharide unit).

The percentage modification can be appropriately set depending on the intended use of the gel composition. For example, in the case of preparing a gel composition exhibiting excellent moldability at the time of gelation and high

gel strength, the moldability at the time of gelation becomes superior and the gel strength increases when the percentage modification is in a specific range, and thus the percentage modification is preferably 25% or more and 85% or less and more preferably 30% or more and 70% or less.

<Average molecular weight>

The average molecular weight of the hyaluronic acid having an anionic modifying group can be appropriately set depending on the intended use of the gel composition. For example, in the case of forming a gel composition exhibiting excellent moldability at the time of gelation and high gel strength, the moldability at the time of gelation becomes superior and the gel strength increases as the average molecular weight increases, and thus the average molecular weight is preferably 10 kDa or more, more preferably 50 kDa or more, still more preferably 100 kDa or more, yet more preferably 300 kDa or more, and yet still more preferably 500 kDa or more. The average molecular weight of the hyaluronic acid having an anionic modifying group can be measured by the method to be described in Examples later.

<Salt of hyaluronic acid having anionic modifying group>

The salt of hyaluronic acid having an anionic modifying group can be appropriately selected depending on the intended use of the gel composition of the present invention and is not particularly limited. For example, in a case in which the gel composition of the present invention is used in the fields of foods, cosmetics, medical devices, and medicines, the salt of hyaluronic acid having an anionic modifying group is preferably a food or a pharmaceutically acceptable salt, and specific examples thereof may include a sodium salt, a potassium salt, and an ammonium salt.

<Method for producing hyaluronic acid having anionic modifying group and salt thereof>

Hyaluronic acid having an anionic modifying group and a salt thereof can be produced by introducing an anionic modifying group into (unmodified) hyaluronic acid and/or a salt thereof to be a raw material.

(In case in which anionic modifying group is functional group having carboxy group)

In a case in which the anionic modifying group is a functional group having a carboxy group, the anionic modifying group can be introduced by reacting dissolved raw material hyaluronic acid and/or a salt thereof with a precursor (for example, haloacetic acid, halopropionic acid, chlorosuccinic acid, chloroglutaric acid, or chloropropanetricarboxylic acid) of the anionic modifying group having a halogen in a carbon chain in a water-containing solvent having a temperature of 30°C or less. Here, the water-containing solvent is water or a mixed solution of a water-soluble organic solvent and water, and the proportion of the water-soluble organic solvent in the mixed solution is 60 v/v% or less. The percentage modification of hyaluronic acid having an anionic modifying group and a salt thereof can be controlled by changing the amount of precursor added and the reaction time.

(In case in which anionic modifying group is sulfuric acid group)

In a case in which the anionic modifying group is a sulfuric acid group, the anionic modifying group can be introduced by, for example, a known sulfation method. Specifically, it is preferable to use a sulfuric acid-trimethylamine complex as a sulfating agent. The reaction condition can be set to, for example, a condition of an aprotic polar solvent (for example, dimethylformamide), a temperature of from 50°C to 60°C, and a reaction time of 10 hours to several days. The hyaluronic acid having an anionic modifying group and a salt thereof thus generated may be purified by gel filtration, a fractional precipitation treatment using acetone, and the like, if necessary. The percentage modification of hyaluronic acid having an anionic modifying group and a salt thereof can be controlled by changing the amount of sulfating agent added.

<Raw material hyaluronic acid and/or salt thereof>

Hyaluronic acid and/or a salt thereof, which are a raw material to be used in the production of hyaluronic acid having an anionic modifying group and a salt thereof, may be those extracted from natural products (for example, biological tissues such as crest, umbilical cord, skin, and synovial fluid) such as animals, those (for example, a fermentation method using bacteria of the genus Streptococcus) obtained by culturing microorganisms, animal cells, or plant cells, or those chemically or enzymatically synthesized. Examples of a salt of hyaluronic acid which is a raw material may include the same ones as those exemplified as a salt of hyaluronic acid having an anionic modifying group.

<Content of hyaluronic acid having anionic modifying group and salt thereof in gel composition>

The content of the hyaluronic acid having an anionic modifying group and a salt thereof in the gel composition of the present invention can be appropriately set depending on the intended use of the gel composition. The moldability at the time of gelation becomes superior and the gel strength increases as the content of the hyaluronic acid having an anionic modifying group and a salt thereof is higher. The content of the hyaluronic acid having an anionic modifying group and a salt thereof is usually 0.05 w/v% or more and 5 w/v% or less, more preferably 0.1 w/v% or more and 2 w/v% or less, and still more preferably 0.25 w/v% or more and 1 w/v% or less.

<Ion>

The gel composition of the present invention contains an ion of at least one kind of element selected from the group consisting of elements belonging to from Period 3 to Period 6 and from Group 2 to Group 12 in the Periodic Table. The gel composition of the present invention may further contain a counter ion of the ion.

<Kind of ion>

From the viewpoint that the effect by the present invention is more remarkably exerted, the ion contained in the gel composition of the present invention is preferably an ion of at least one kind of element selected from the group consisting of elements belonging to Period 4 and from Group 3 to Group 12 in the Periodic Table and more preferably $Fe^{3+}$ or $Cu^{2+}$.

<Ion source>

The ion source (salt of element) of the ion contained in the gel composition of the present invention is not particularly limited as long as it generates the ion described above. Specific examples of the ion source may include metal salts such as $CuCl_2$, $FeCl_3$, $CaCl_2$, $MgCl_2$, $NiCl_2$, $ZnCl_2$, $CuSO_4$, $FeSO_4$, $MgSO_4$, $CoSO_4$, $NiSO_4$, $ZnSO_4$, $Cu_3(PO_4)_2$, $Fe_3(PO_4)_2$, $FePO_4$, $Cu(NO_3)_2$, $Fe(NO_3)_2$, $Ca(NO_3)_2$, $Mg(NO_3)_2$, $Co(NO_3)_2$, $Ni(NO_3)_2$, $Zn(NO_3)_2$, $Ca(CH_3COO)_2$, $Mg(CH_3COO)_2$, $Co(CH_3COO)_2$, $Ni(CH_3COO)_2$, $Zn(CH_3COO)_2$, $Ca(CH_3CH(OH)COO)_2$, $Mg(CH_3CH(OH)COO)_2$, $Ca(CH_2OH(CHOH)_4(COO))_2$, and $Mg(CH_2OH(CHOH)_4(COO))_2$ and hydrates thereof. The gel composition of the present invention may contain one kind or two or more kinds of these ion sources.

<Concentration of ion>

The concentration of ion in the gel composition of the present invention can be appropriately set depending on the intended use of the gel composition. For example, in a case in which the ion is $Fe^{3+}$, the ion concentration may be 1 mM or more and 300 mM or less, and the ion concentration is preferably 5 mM or more and 200 mM or less from the viewpoint that the moldability at the time of gelation becomes superior and the gel strength further increases. In addition, for example, in a case in which the ion is $Cu^{2+}$, the ion concentration may be 10 mM or more and 500 mM or less, and the ion concentration is preferably 50 mM or more and 250 mM or less from the viewpoint that the moldability at the time of gelation becomes superior and the gel strength further increases.

<Provided aspect of composition>

The gel composition of the present invention may be provided in a state in which at least one kind of modified water-soluble hyaluronic acid selected from the group consisting of hyaluronic acid having an anionic modifying group and a salt of the hyaluronic acid and an ion (or ion source) are not mixed or in a state in which at least one kind of modified water-soluble hyaluronic acid selected from the group consisting of hyaluronic acid having an anionic modifying group and a salt of the hyaluronic acid and an ion (or ion source) are mixed together (gelled state). In the case of being provided in an unmixed state, the gel composition can be prepared into a gel by mixing the modified water-soluble hyaluronic acid and the ion (or ion source) together at the time of use to form an ionic bond.

<Shape of composition>

The gel composition according to an embodiment is insoluble in water in a state in which at least one kind of modified water-soluble hyaluronic acid selected from the group consisting of hyaluronic acid having an anionic modifying group and a salt of the hyaluronic acid and an ion (or ion source) are mixed together (gelled state). In addition, the gel composition according to an embodiment is a gel exhibiting shape maintaining property in a state in which at least one

kind of modified water-soluble hyaluronic acid selected from the group consisting of hyaluronic acid having an anionic modifying group and a salt of the hyaluronic acid and an ion (or ion source) are mixed together (gelled state). The gel composition in this embodiment can form a water insoluble gel or a gel molded into an arbitrary shape immediately when a solution of at least one kind of modified water-soluble hyaluronic acid selected from the group consisting of hyaluronic acid having an anionic modifying group and a salt of the hyaluronic acid and a solution of an ion are brought into contact with each other.

The shape of the gel composition according to an embodiment is not limited to this, but examples thereof may include a fiber (the thickness is arbitrary, and the structure is, for example, a hollow structure or another special structure), a sheet, a film, a nonwoven fabric, an unstructured gel, and a particle shape such as a capsule.

<Molding method>

As a method for molding the gel composition into the above-mentioned shape according to an embodiment, for example, a mold in which the desired shape portion is formed as a cavity is prepared, a solution of at least one kind of modified water-soluble hyaluronic acid selected from the group consisting of hyaluronic acid having an anionic modifying group and a salt of the hyaluronic acid is injected into the cavity portion, and a solution of an ion is added to and mixed with the solution, whereby a gel composition having a desired shape can be obtained.

As a method for molding the gel composition into the above-mentioned shape according to another embodiment, for example, a solution of at least one kind of modified water-soluble hyaluronic acid selected from the group consisting of hyaluronic acid having an anionic modifying group and a salt of the hyaluronic acid is injected into a container equipped with a function of extrusion and discharge such as a syringe and the solution of modified water-soluble hyaluronic acid is discharged from the container into a solution of an ion to bring these solutions into contact with each other, whereby a gel composition having a desired shape can be obtained.

<Physical properties (maximum load value) of composition>

The gel composition of the present invention may have a maximum load value of 300 $N/m^2$ or more as measured using a texture analyzer. The maximum load value is measured by the following method and is an index of gel strength (hardness). The maximum load value of the gel composition can be measured by the method to be described in Examples later.

<Use of composition>

The gel composition according to the present embodiment exhibits moldability capable of being shaped into an arbitrary shape at the time of gelation in addition to the inherent properties of hyaluronic acid such as water retentivity and elasticity and can maintain the shape even in water and thus can be applied to various uses. Examples of the use may include organ alternate devices/biological regeneration induction devices such as artificial dura mater, artificial cornea, artificial lens, artificial vitreous body, artificial esophagus, artificial respiratory tract, artificial blood vessel, artificial erythrocyte, artificial platelet, artificial cartilage, artificial skin, and peripheral nerve regeneration induction tubes, medical devices such as surgical sutures, bioabsorbable stents, artificial fiber cloths, cardiac repair patches, pericardial sheets, antiadhesive materials, wound dressing materials, decubitus sheets, pad materials, biological tissue adhesive materials, hemostat materials, submucous layer filling materials, injection materials for joint, injection materials for cosmetic medical treatment, microneedles, punctal plugs, aids for ophthalmic surgery, organ protective materials, mucosa protective materials, hand sanitizers, and medicine sustained-release carriers, medicines or supplements such as wound healing promoting agents, eye drops, inclusive capsules of physiologically active substances, cells, microorganisms, and the like, and iron preparations, foods such as gel-like seasoning, medicated jelly, and gummy, cosmetics such as hair care agents, cleansing agents, moisturizing agents, and packing agents, substrates for a 3D printer, cell scaffolds, cell culture mediums, encapsulants, implantable biosensors, implantable imaging agents, coating agents, hygiene products such as diapers, water retaining materials for tree planting, fertilizers, soil conditioners, and seed covering materials.

<Method for producing gel composition>

The gel composition of the present invention can be produced, for example, by a method including a step of mixing a solution containing an ion of at least one kind of element selected from the group consisting of elements belonging to from Period 3 to Period 6 and from Group 2 to Group 12 in the Periodic Table and at least one kind of modified water-soluble hyaluronic acid selected from the group consisting of hyaluronic acid having an anionic modifying group and a salt of the hyaluronic acid. The aspects of various kinds of components, conditions and the like are as described above.

## Examples

Hereinafter, the present invention will be described in more detail based on Examples and the like. However, the present invention is not limited to the following Examples.

[Test method]

<Preparation method 1 of hyaluronic acid having anionic modifying group (carboxymethyl group)>

Into a 30 mL sample bottle, 1.04 g of sodium hydroxide was weighed and taken, and then 8 mL of water was added thereto to dissolve the sodium hydroxide. Next, 2.0 g of hyaluronic acid was added to and dissolved in the solution, then 1.52 g of sodium monochloroacetate was added to and dissolved in the solution, and the resultant solution was left to still stand at room temperature for 48 hours. The pH of the reaction solution was 13. Thereafter, 80 mL of ethanol was put into a 200 mL beaker, and the reaction solution was added thereto while conducting stirring to precipitate hyaluronic acid having a carboxymethyl group. Thereafter, the precipitate was recovered into a 200 mL beaker using a 400 mesh filter cloth, and 40 mL of a 10% sodium chloride aqueous solution was added thereto to dissolve the precipitate. Furthermore, the pH was adjusted with 8% hydrochloric acid aqueous solution and then 80 mL of ethanol was added to the solution while conducting stirring to precipitate the hyaluronic acid having a carboxymethyl group again. The precipitate was washed three times with 100 mL of 80% water-containing ethanol, then filtered under reduced pressure, and dried at 55°C for 3 hours under reduced pressure, thereby obtaining hyaluronic acid having a carboxymethyl group.

<Preparation method 2 of hyaluronic acid having anionic modifying group (carboxymethyl group)>

Into a 30 mL sample bottle, 1.04 g of sodium hydroxide was weighed and taken, and then 8 mL of water was added thereto to dissolve the sodium hydroxide. Next, 2.0 g of hyaluronic acid was added to and dissolved in the solution, then 1.52 g of sodium monobromoacetate was added to and dissolved in the solution, and the mixture was left to still stand at 4°C for 48 hours. The pH of the reaction solution was 13. Thereafter, 80 mL of ethanol was put into a 200 mL beaker, and the reaction solution was added thereto while conducting stirring to precipitate hyaluronic acid having a carboxymethyl group. Thereafter, the precipitate was recovered into a 200 mL beaker using a 400 mesh filter cloth, and 40 mL of a 10% sodium chloride aqueous solution was added thereto to dissolve the precipitate. Furthermore, the pH was adjusted with 8% hydrochloric acid aqueous solution and then 80 mL of ethanol was added to the solution while conducting stirring to precipitate the hyaluronic acid having a carboxymethyl group again. The precipitate was washed three times with 100 mL of 80% water-containing ethanol, then filtered under reduced pressure, and dried at 55°C for 3 hours under reduced pressure, thereby obtaining hyaluronic acid having a carboxymethyl group.

Hyaluronic acids having a carboxymethyl group which had various average molecular weights and percentage modifications were obtained in conformity to the above preparation method and by changing the average molecular weight of hyaluronic acid to be a raw material and the amount of haloacetic acid (sodium monochloroacetate or sodium monobromoacetate) used.

<Measurement of percentage modification of hyaluronic acid having carboxymethyl group>

The percentage modification of hyaluronic acid having a carboxymethyl group was determined from the integrated values in $^1$H-NMR spectrum by the following method.

(Sample preparation)

In 0.7 mL of heavy water, 7 mg of the sample and 1 mg of the internal standard substance 4,4-dimethyl-4-silapentane-1-sulfonic acid (DSS) sodium salt were dissolved, and the solution was transferred into an NMR sample tube, and the tube was capped.

(Measurement condition)

Apparatus: Varian NMR system Model 400NB (Varian Technologies Japan Limited)
Observation frequency: 400 MHz
Temperature: 30°C
Reference: DSS (0 ppm)

Number of integrations: 64 times

(Analysis method)

The peak of the N-acetyl group ($CH_3$) of hyaluronic acid appearing in the vicinity of 2.0 ppm in the $^1$H-NMR spectrum and the peak of the methylene group ($-CH_2-$) of carboxymethyl group appearing in the range of 3.8 ppm or more and 4.2 ppm or less were integrated. The percentage modification was determined from the integrated values according to the following equation.

$$\text{Percentage modification} = \{(\text{integrated value of peak appearing in range of 3.8 ppm or more and 4.2 ppm or less}/2)/(\text{integrated value of peak at 2.0 ppm}/3)\} \times 100\ (\%)$$

<Measurement of average molecular weight>

The average molecular weights of hyaluronic acid having a carboxymethyl group and hyaluronic acid were measured by the following method.

(Average molecular weight of hyaluronic acid)

A solution prepared by precisely weighing about 0.05 g of hyaluronic acid, dissolving the hyaluronic acid in a sodium chloride solution having a concentration of 0.2 mol/L, and adjusting the volume of solution to exactly 100 mL and solutions prepared by accurately measuring this solution by 8 mL, 12 mL, and 16 mL, adding a sodium chloride solution having a concentration of 0.2 mol/L to these respective solutions, and adjusting the volume of solutions to exactly 20 mL were used as sample solutions. These sample solutions and a sodium chloride solution having a concentration of 0.2 mol/L were subjected to the measurement of specific viscosity at 30.0 ± 0.1°C (Equation (A)) by the Japanese Pharmacopoeia (16th revision), General Test Method, Viscosity Measurement Method (1st method, capillary viscosity measurement method), and the reduced viscosity at each concentration was calculated (Equation (B)). A graph was drawn by taking the reduced viscosity as the vertical axis and the concentration of the present product with respect to the converted dry product (g/100 mL) as the horizontal axis, and the intrinsic viscosity was determined from the intersection of the straight line connecting the respective points and the vertical axis. The intrinsic viscosity determined was substituted into Laurent's Equation (Equation (C)) to calculate the average molecular weight (Torvard C Laurent, Marion Ryan, and Adolph Pietruszkiewicz, "Fractionation of hyaluronic Acid", Biochemical et Biophysical Acta., 42, 476-485 (1960), YOMOTA Chikako, "Evaluation of Molecular Weight of Sodium Hyaluronate Preparation by SEC-MALLS", National Institute of Advanced Industrial Science, No. 121, 030-033 (2003)).

$$(\text{Equation A})\ \text{Specific viscosity} = \{\text{number of seconds required for sample solution flow}\}/(\text{number of seconds required for 0.2 mol/L sodium chloride solution flow})\} - 1$$

$$(\text{Equation B})\ \text{Reduced Viscosity (dL/g)} = \text{specific viscosity}/(\text{concentration of present product with respect to converted dry product (g/100 ml)})$$

$$(\text{Equation C})\ \text{Intrinsic viscosity (dL/g)} = 3.6 \times 10^{-4} M^{0.78}$$

M: average molecular weight

(Average molecular weight of hyaluronic acid having carboxymethyl group)

Using a gel filtration column, a plurality of (purified) hyaluronic acids (reference substance) of which the average molecular weights were determined by the above method were analyzed by liquid chromatography, and a calibration curve was created from the retention times thereof. In the same manner, hyaluronic acid having a carboxymethyl group to be a target of measurement was analyzed by liquid chromatography, and the average molecular weight of hyaluronic acid having a carboxymethyl group was determined from the retention times thereof using the calibration curve.

<Metal ion solution>

$CuCl_2$, $FeCl_2$, and $FeCl_3$ were each dissolved in water to obtain a metal ion solution.

<Measurement of hardness using texture analyzer>

Into a container having a diameter of 15 mm and a depth of 19 mm, 2 mL of hyaluronic acid having a carboxymethyl group or an aqueous solution of unmodified hyaluronic acid was added, 1 mL of metal ion solution was added to this using a micropipette, and then the resultant solution was left to still stand for 5 minutes. The measurement was conducted using a texture analyzer under the following conditions. The value (unit: $N/m^2$) of the maximum load value (maximum test force) when a load was applied to the mixture by penetrating the plunger by 28 mm from the height of 30 mm from the bottom of the container at a descending speed of 1 mm/sec was taken as the hardness of the measurement sample.

(Measurement condition)

- Measurement apparatus: Texture analyzer (Texture Analyzer TA. XT., manufactured by Stable Micro Systems)
- Plunger: P/6 diameter 6 mm DIA CYLINDER STAINLESS
- Adapter: AD/10 (100 mm Probe Adapter)
- Range width: 0 to 1 kg
- Descending speed of plunger: 1 mm/sec
- Mode: Distance
- Contact load: 30 g
- Distance penetrated into sample: 28 mm
- Ascending speed of plunger after being penetrated into sample: 10 mm/sec
- Measurement temperature: 25°C

[Test Example 1: Gel formation test (influence of hyaluronic acid concentration, percentage modification, and metal ion concentration)]

A $FeCl_3$ aqueous solution having the concentration presented in Tables 1 to 3 was added to each well of a 24-well plate (manufactured by Sumitomo Bakelite Co., Ltd.) by 1 mL. An aqueous solution containing hyaluronic acid having a carboxymethyl group (percentage modification of 32%, 58%, or 83%) at the concentration (HA concentration) presented in Tables 1 to 3 was dropped (3 drops) thereto using a micropipette, and immediately the situation of gelation was visually evaluated. The average molecular weights of hyaluronic acids having a carboxymethyl group are all 1000 kDa. The results are collectively presented in Tables 1 to 3. In Tables 1 to 3, a case in which a gel maintaining the shape was confirmed was evaluated as "⊙", a case in which an unstructured gel hardly maintaining the shape was confirmed was evaluated as "○", and a case in which gel formation was not confirmed was evaluated as "×". Those evaluated as "⊙" or "○" can be said to exhibit moldability.

[Table 1]

Table 1. Gel formation test: percentage modification of 83% of hyaluronic acid having carboxymethyl group

| | | $FeCl_3$ concentration (mM) | | | | | | | | |
|---|---|---|---|---|---|---|---|---|---|---|
| | | 1.25 | 2.5 | 5 | 10 | 12.5 | 25 | 50 | 100 | 200 |
| HA concentration (w/v%) | 1.0 | ○ | ○ | ⊙ | ⊙ | ⊙ | ⊙ | ⊙ | ⊙ | ⊙ |
| | 0.5 | ○ | ○ | ⊙ | ⊙ | ⊙ | ⊙ | ⊙ | ⊙ | ⊙ |
| | 0.25 | ○ | ○ | ⊙ | ⊙ | ⊙ | ⊙ | ⊙ | ⊙ | ○ |
| | 0.13 | ○ | ○ | ○ | ○ | ○ | × | ○ | × | × |

[Table 2]

Table 2. Gel formation test: percentage modification of 58% of hyaluronic acid having carboxymethyl group

| | | $FeCl_3$ concentration (mM) | | | | | | | | |
|---|---|---|---|---|---|---|---|---|---|---|
| | | 1.25 | 2.5 | 5 | 10 | 12.5 | 25 | 50 | 100 | 200 |
| HA concentration (w/v%) | 1.0 | ○ | ○ | ⊙ | ⊙ | ⊙ | ⊙ | ⊙ | ⊙ | ⊙ |
| | 0.5 | ○ | ○ | ⊙ | ⊙ | ⊙ | ⊙ | ⊙ | ⊙ | ⊙ |
| | 0.25 | ○ | ○ | ⊙ | ⊙ | ⊙ | ⊙ | ⊙ | ⊙ | ○ |
| | 0.13 | ○ | ○ | ○ | ○ | ○ | ○ | ○ | × | × |

[Table 3]

Table 3. Gel formation test: percentage modification of 32% of hyaluronic acid having carboxymethyl group

| | | $FeCl_3$ concentration (mM) | | | | | | | | |
|---|---|---|---|---|---|---|---|---|---|---|
| | | 1.25 | 2.5 | 5 | 10 | 12.5 | 25 | 50 | 100 | 200 |
| HA concentration (w/v/%) | 1.0 | ○ | ○ | ○ | ⊙ | ⊙ | ⊙ | ⊙ | ⊙ | ○ |
| | 0.5 | ○ | ○ | ⊙ | ⊙ | ⊙ | ⊙ | ⊙ | ⊙ | × |
| | 0.25 | ○ | ○ | ○ | ⊙ | ⊙ | ⊙ | ⊙ | ○ | × |
| | 0.13 | ○ | ○ | ○ | ○ | ○ | ○ | × | × | × |

Formation of gel was immediately confirmed as hyaluronic acid having an anionic modifying group (carboxymethyl group) and a metal ion ($Fe^{3+}$) were brought into contact with each other. In the measurement samples evaluated as "⊙", the formed gels firmly maintained the shape and were elastic. In the measurement samples evaluated as "○", the formed gels hardly maintained the shape and had an unstructured shape. In the measurement samples evaluated as "×", the shape of the gel became unrecognizable when vibration and the like were applied to the gel. There was a tendency that it was easier to form a gel maintaining the shape as the percentage modification of hyaluronic acid having an anionic modifying group (carboxymethyl group) was higher, the concentration of the hyaluronic acid in the aqueous solution was higher, and the concentration of metal ion ($Fe^{3+}$) was higher.

[Test Example 2: Gel formation test (influence of hyaluronic acid concentration, percentage modification, and metal ion concentration)]

A $CuCl_2$ aqueous solution having the concentration presented in Tables 4 to 5 was added to each well of a 24-well plate (manufactured by Sumitomo Bakelite Co., Ltd.) by 1 mL. An aqueous solution containing hyaluronic acid having a carboxymethyl group (percentage modification of 58% or 83%) at the concentration (HA concentration) presented in Tables 4 to 5 was dropped (3 drops) thereto using a micropipette, and immediately the situation of gelation

was visually evaluated. The average molecular weights of hyaluronic acids having a carboxymethyl group are all 1000 kDa. The results are collectively presented in Tables 4 to 5. In Tables 4 to 5, a case in which a gel maintaining the shape was confirmed was evaluated as "⊙", a case in which an unstructured gel hardly maintaining the shape was confirmed was evaluated as "○", and a case in which gel formation was not confirmed was evaluated as "×". Those evaluated as "⊙" or "○" can be said to exhibit moldability.

[Table 4]

Table 4. Gel formation test: percentage modification of 83% of hyaluronic acid having carboxymethyl group

| | | $CuCl_2$ concentration (mM) | | | | |
|---|---|---|---|---|---|---|
| | | 12.5 | 25 | 50 | 100 | 200 |
| HA concentration (w/v%) | 1.0 | ○ | ○ | ⊙ | ⊙ | ⊙ |
| | 0.5 | ○ | ○ | ⊙ | ⊙ | ⊙ |
| | 0.25 | ○ | ⊙ | ⊙ | ○ | ○ |
| | 0.13 | × | × | × | ○ | × |

[Table 5]

Table 5. Gel formation test: percentage modification of 58% of hyaluronic acid having carboxymethyl group

| | | $CuCl_2$ concentration (mM) | | | | |
|---|---|---|---|---|---|---|
| | | 12.5 | 25 | 50 | 100 | 200 |
| HA concentration (w/v%) | 1.0 | ○ | ○ | ○ | ○ | ⊙ |
| | 0.5 | × | ○ | ○ | ○ | ○ |
| | 0.25 | × | ○ | ○ | ○ | ○ |
| | 0.13 | × | × | × | × | × |

Formation of gel was immediately confirmed as hyaluronic acid having an anionic modifying group (carboxymethyl group) and a metal ion ($Cu^{2+}$) were brought into contact with each other. In the measurement samples evaluated as "⊙", the formed gels firmly maintained the shape and were elastic. In the measurement samples evaluated as "○", the formed gels hardly maintained the shape and had an unstructured shape. In the measurement samples evaluated as "×", the shape of the gel became unrecognizable when vibration and the like were applied to the gel. There was a tendency that it was easier to form a gel maintaining the shape as the percentage modification of hyaluronic acid having an anionic modifying group (carboxymethyl group) was higher, the concentration of the hyaluronic acid in the aqueous solution was higher, and the concentration of metal ion ($Cu^{2+}$) was higher.

[Test Example 3: Gel formation test (influence of average molecular weight)]

A 5 mM $FeCl_3$ aqueous solution was added to each well of a 24-well plate (manufactured by Sumitomo Bakelite Co., Ltd.) by 1 mL. An aqueous solution containing hyaluronic acid which had a carboxymethyl group and the average molecular weight and percentage modification presented in Table 6 at the concentration (HA concentration) presented in Table 6 was dropped (3 drops) thereto using a micropipette, and immediately the situation of gelation was visually evaluated. The results are collectively presented in Table 6. In Table 6, a case in which a gel maintaining the shape was confirmed was evaluated as "⊙", a case in which an unstructured gel hardly maintaining the shape was confirmed was evaluated as "○", and a case in which gel formation was not confirmed was evaluated as "×". Those evaluated as "⊙" or "○" can be said to exhibit moldability.

[Table 6]

Table 6. Gel formation test: metal ion solution (5 mM $FeCl_3$)

| | | Average molecular weight (kDa) Percentage modification (%) | | | | | |
|---|---|---|---|---|---|---|---|
| | | 1410 kDa 55% | 1020 kDa 58% | 610 kDa 47% | 340 kDa 46% | 160 kDa 46% | 13 kDa 46% |
| HA concentration (w/v%) | 1.0 | ⊙ | ⊙ | ⊙ | ⊙ | ○ | ○ |
| | 0.5 | ⊙ | ⊙ | ⊙ | ○ | ○ | × |
| | 0.25 | ⊙ | ⊙ | ○ | × | × | × |
| | 0.13 | ○ | ○ | × | × | × | × |

Formation of gel was immediately confirmed as hyaluronic acid having an anionic modifying group (carboxymethyl group) and a metal ion ($Fe^{3+}$) were brought into contact with each other. In the measurement samples evaluated as "⊙", the formed gels firmly maintained the shape and were elastic. In the measurement samples evaluated as "○", the formed gels hardly maintained the shape and had an unstructured shape. In the measurement samples evaluated as "×", the shape of the gel became unrecognizable when vibration and the like were applied to the gel. There was a tendency that it was easier to form a gel maintaining the shape as the average molecular weight of the hyaluronic acid having an anionic modifying group (carboxymethyl group) was higher and the concentration of the hyaluronic acid in the aqueous solution was higher.

[Test Example 4: Gel strength test (influence of anionic modifying group)]

The hardness measurement was conducted using an aqueous solution containing hyaluronic acid having a carboxymethyl group (average molecular weight of 1000 kDa, percentage modification of 58%) at 1 w/v% and 2 mM $FeCl_3$ aqueous solution according to the method described above using a texture analyzer, and the maximum load value (unit: $N/m^2$) was determined. As a control, the maximum load value (unit: $N/m^2$) was determined using an aqueous solution containing unmodified hyaluronic acid (average molecular weight of 1000 kDa) at 1 w/v% and a 2 mM $FeCl_3$ aqueous solution in the same manner. The same measurement sample was subjected to the measurement two times, and the average value (unit: $N/m^2$) of the maximum load values obtained was taken as the hardness of the measurement sample.

The results are presented in Table 7.

[Table 7]

Table 7. Gel strength test

| | Maximum load value (unit: $N/m^2$) |
|---|---|
| Hyaluronic acid having carboxymethyl group | 812 |
| Unmodified hyaluronic acid | 246 |

Unmodified hyaluronic acid did not form a gel maintaining the shape even when being brought into contacted with a metal ion ($Fe^{3+}$). On the other hand, hyaluronic acid having an anionic modifying group (carboxymethyl group) immediately formed a gel maintaining the shape when being brought into contacted with a metal ion ($Fe^{3+}$). In addition, the formed gel had sufficient gel strength.

[Test Example 5: Gel strength test (influence of percentage modification and metal ion concentration)]

The hardness measurement was conducted using an aqueous solution containing hyaluronic acid having a carboxymethyl group (average molecular weight of 1000 kDa, percentage modification of 32%, 58%, or 83%) at 1 w/v%

and a $FeCl_3$ aqueous solution or $CuCl_2$ aqueous solution having the concentration presented in Table 8 according to the method described above using a texture analyzer, and the maximum load value (unit: $N/m^2$) was determined. The same measurement sample was subjected to the measurement two times, and the average value (unit: $N/m^2$) of the maximum load values obtained was taken as the hardness of the measurement sample.

The results are presented in Table 8.

[Table 8]

Table 8. Gel strength test

| Metal ion \ Percentage modification | | Maximum load value (unit: $N/m^2$) 32% | 58% | 83% |
|---|---|---|---|---|
| $FeCl_3$ | 100 mM | 14385 | 44458 | 16657 |
| | 10 mM | 7625 | 3285 | 9443 |
| | 1 mM | 256 | 352 | 178 |
| $CuCl_2$ | 100 mM | 184 | 283 | 3314 |
| | 10 mM | 202 | 213 | 337 |

The measurement samples all immediately formed a gel maintaining the shape when a metal ion ($Fe^{3+}$ or $Cu^{2+}$) was added thereto. The gel strength in a case in which the metal ion is $Fe^{3+}$ tends to be higher than that in a case in which the metal ion is $Cu^{2+}$.

## Claims

1. A gel composition comprising:

   at least one kind of modified water-soluble hyaluronic acid selected from the group consisting of hyaluronic acid having an anionic modifying group and a salt of the hyaluronic acid; and
   an ion of at least one kind of element selected from the group consisting of elements belonging to from Period 3 to Period 6 and from Group 2 to Group 12 in Periodic Table.

2. The gel composition according to claim 1, wherein the gel composition is insoluble in water.

3. The gel composition according to claim 1 or 2, wherein a maximum load value to be measured using a texture analyzer is 300 $N/m^2$ or more.

4. The gel composition according to any one of claims 1 to 3, wherein the ion is an ion of at least one kind of element selected from the group consisting of elements belonging to Period 4 and from Group 3 to Group 12 in Periodic Table.

5. The gel composition according to any one of claims 1 to 4, wherein the ion is $Fe^{3+}$ or $Cu^{2+}$.

6. The gel composition according to any one of claims 1 to 5, wherein a percentage modification of the hyaluronic acid having an anionic modifying group is 25% or more.

7. The gel composition according to any one of claims 1 to 6, wherein an average molecular weight of the hyaluronic acid having an anionic modifying group is 10 kDa or more.

8. The gel composition according to any one of claims 1 to 7, wherein the anionic modifying group is a carboxyalkyl group.

9. The gel composition according to any one of claims 1 to 8, wherein the gel composition is a gel exhibiting moldability at time of gelation.

**10.** A method for producing a gel composition, comprising a step of mixing
a solution containing an ion of at least one kind of element selected from the group consisting of elements belonging to from Period 3 to Period 6 and from Group 2 to Group 12 in Periodic Table and
at least one kind of modified water-soluble hyaluronic acid selected from the group consisting of hyaluronic acid having an anionic modifying group and a salt of the hyaluronic acid.

**11.** The production method according to claim 10, wherein the solution contains at least one kind of metal ion selected from the group consisting of $Fe^{3+}$ and $Cu^{2+}$.

**12.** The production method according to claim 10 or 11, wherein the solution contains $Fe^{3+}$ at 0.5 mM or more.

**13.** The production method according to claim 10 or 11, wherein the solution contains $Cu^{2+}$ at 10 mM or more.

## INTERNATIONAL SEARCH REPORT

International application No.
PCT/JP2017/039272

**A. CLASSIFICATION OF SUBJECT MATTER**
Int.Cl. C08B37/08(2006.01)i

According to International Patent Classification (IPC) or to both national classification and IPC

**B. FIELDS SEARCHED**

Minimum documentation searched (classification system followed by classification symbols)
Int.Cl. C08B37/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY(STN) JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2015/053281 A1 (KEWPIE CORPORATION) 16 April 2015, paragraphs [0143], [0146], [0147], [0149], [0126]-[0142], [0117], [0124], [0032]-[0034] & TW 201601732 A | 1-13<br>1-13 |
| Y | JP 2007-520589 A (UNIVERSITY OF UTAH RESEARCH FOUNDATION) 26 July 2007, paragraphs [0292], [0293], table 3, fig. 5 & WO 2005/056608 A1, page 96 line 3 to page 97, line 22, table 3, fig. 5 & JP 4993465 B2 & US 2008/0025950 A1 & US 2010/0330143 A1 & US 2012/0142907 A1 & EP 1694712 A1 & EP 2399940 A2 & CA 2549295 A & ZA 200604869 A & IL 176089 D & AU 2004297231 A | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 January 2018 | 16 January 2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2017/039272

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-297360 A (IHARA SUISAN KK) 15 November 2007, examples 1, 2<br>(Family: none) | 1-13 |
| Y | JP 2014-502678 A (CONTIPRO BIOTECH S.R.O.) 03 February 2014, paragraphs [0031], [0046], table 1<br>& WO 2012/089179 A1, page 6, line 16 to page 7, line 1, page 10, lines 9-15, table 1 & CZ 20101001 A & AR 84642 A & EP 2659035 A1 & US 2013/0309494 A1 & KR 10-2014-0006851 A & RU 2013135904 A | 1-13 |
| Y | JP 5-124968 A (ETHICON INC.) 21 May 1993, paragraphs [0014], [0024]<br>& US 5532221 A, column 3, lines 50-56, example 1(a) & CA 2065111 A1 & EP 507604 A2 & AU 1401592 A & BR 9201215 A & GR 92100122 A & AU 647905 B & AT 299706 T & ES 2246490 T & DE 69233535 T & EP 1593394 A3 | 1-13 |
| Y | JP 7-163655 A (HERCULES INCORPORATED) 27 June 1995, example 10<br>& EP 645150 A1, example 10 & CA 2132293 A & PL 305241 A & AU 7429694 A & BR 9403911 A & CN 1114177 A & US 5531716 A & RU 94034125 A & US 5650116 A & AU 685152 B & US 5820608 A & US 6096018 A & US 6126645 A & AT 209511 T & DK 645150 T & DE 69429227 T | 1-13 |
| A | JP 2012-507615 A (CPN S.R.O.) 29 March 2012, examples 7-14<br>& US 2011/0218331 A1, examples 7-14 & WO 2010/051783 A1 & EP 2350135 A1 & CZ 20080705 A & CA 2742428 A & KR 10-2011-0082609 A & RU 2011121239 A & BR 0916131 A & CZ 20080705 A3 | 1-13 |

Form PCT/ISA/210 (continuation of second sheet) (January 2015)

**INTERNATIONAL SEARCH REPORT**

International application No.
PCT/JP2017/039272

<Scope of search>

The wordings "anionic modification group" and "elements belonging to the third period to the sixth period and group 2 to group 12 in the periodic table" in claims 1 and 10 encompass great many groups and elements. However, it is only a carboxymethyl group and the like in paragraphs [0019] and [0044]-[0046] of the specification for the "anionic modification group" and $Fe^{3+}$ and $Cu^{2+}$ in paragraphs [0032] and [0056]-[0073] of the specification for "elements belonging to the third period to the sixth period and group 2 to group 12 in the periodic table" that are disclosed in the specification within the meaning of PCT Article 5, and thus claims 1-4 and 6-10 pertaining to the group and elements are not sufficiently supported within the meaning of PCT Article 6.

Therefore, search was carried out within a rational range especially for inventions with features wherein the "anionic modification group" and the "elements belonging to the third period to the sixth period and group 2 to group 12 in the periodic table" are the groups and elements described in and supported by the specification, namely carboxymethyl group or the like and $Fe^{3+}$ or $Cu^{2+}$, respectively.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H5140201 B
- JP H11512778 B
- JP 2010509425 A
- JP 2016011312 A

### Non-patent literature cited in the description

- **TORVARD C LAURENT ; MARION RYAN ; ADOLPH PIETRUSZKIEWICZ.** Fractionation of hyaluronic Acid. *Biochemical et Biophysical Acta.,* 1960, vol. 42, 476-485
- **YOMOTA CHIKAKO.** Evaluation of Molecular Weight of Sodium Hyaluronate Preparation by SEC-MALLS. *National Institute of Advanced Industrial Science,* 2003, 030-033